Europäisches Patentamt

European Patent Office

Office européen des brevets

(11) Numéro de publication: **0 344 382 B1**

## FASCICULE DE BREVET EUROPEEN

(45) Date de publication de fascicule du brevet: **09.09.92**

(51) Int. Cl.5: **E01C 11/16**, E01C 7/20, E01C 7/35, E01C 19/10, B65D 88/66

(21) Numéro de dépôt: **88401337.6**

(22) Date de dépôt: **02.06.88**

(54) **Composition bitumineuse pour enrobés coulés à froid et procédé de réalisation d'un tel enrobé.**

(43) Date de publication de la demande:
**06.12.89 Bulletin 89/49**

(45) Mention de la délivrance du brevet:
**09.09.92 Bulletin 92/37**

(84) Etats contractants désignés:
**AT BE CH DE ES FR GB GR IT LI LU NL SE**

(56) Documents cités:
**EP-A- 0 055 233
FR-A- 2 261 372
FR-A- 2 368 578
FR-A- 2 443 531
US-A- 3 819 291**

**BITUMEN, vol. 47, no. 2, 1985, pages 55-62, Hamburg, DE; A. HOLL et al.: "Bitumenemulsionen für den Strassenbau"**

(73) Titulaire: **ENTREPRISE JEAN LEFEBVRE**
**11, Bld Jean-Mermoz B.P. 139**
**F-92202 Neuilly-sur-Seine Cédex(FR)**

(72) Inventeur: **Vivier, Maurice**
**11, rue Peclet**
**F-75015 Paris(FR)**

(74) Mandataire: **Ahner, Francis et al**
**CABINET REGIMBEAU, 26, avenue Kléber**
**F-75116 Paris(FR)**

## Description

La présente invention concerne une composition bitumineuse pour enrobés coulés à froid et un procédé de réalisation de ces enrobés.

L'état de la technique antérieure peut par exemple être illustrée par le document US-A-3 819 291 qui consiste à répandre des fibres à la surface d'un revêtement routier.

La technique d'enrobés coulés à froid (E.C.F.) est utilisée depuis de nombreuses années pour l'entretien des revêtements usés de chaussées de toute nature. Les E.C.F. sont des revêtements très fins dont l'épaisseur est sensiblement égale au diamètre des plus gros granulats. La phase bitumineuse permet de lier les granulats au support et d'assurer l'étanchéité de l'ensemble.

On a longtemps employé des granulats de petite taille qui ne permettaient d'obtenir que des revêtements peu rugueux. La technique a évolué et, ainsi, on a été amené à augmenter la taille des granulats, à modifier la nature de la phase bitumineuse, à ajouter des fibres afin d'améliorer les caractéristiques des E.C.F.

Une décision ministérielle définit des normes concernant la rugosité des E.C.F. Celle-ci s'exprime par la "hauteur au sable", paramètre qui doit être d'autant plus élevé que la vitesse des véhicules est grande. Or, il est difficile d'obtenir des E.C.F. rugueux et présentant un bon uni de surface car la réalisation de ces enrobés est liée au phénomène de ségrégation des granulats lors des opérations successives d'enrobage avec la phase bitumeuse, de déversement dans le traîneau épandeur et d'épandage sur le support. Les revêtements obtenus présentent une surface tout à fait irrégulière, ce qui entraîne le rejet d'une partie des gros granulats lors de la remise sous circulation et une diminution de la rugosité escomptée.

La présente invention vise principalement à remédier à ces inconvénients. Elle vise aussi à fournir un E.C.F. qui présente des facilités de mise en oeuvre par rapport aux E.C.F. existants. En effet, les enrobés coulés à froid sont des produits très peu homogènes qui sont difficiles à manier. Aussi, en travaillant avec un E.C.F. présentant une viscosité assez élevée, il sera plus facile de réaliser des répandages en grandes largeurs et sans bavure .

Un autre but est de fournir un E.C.F. présentant des caractéristiques améliorées par rapport aux E.C.F. de la technique antérieure, telles qu'une meilleure déformabilité qui procure une augmentation de la durée de service.

La présente invention concerne donc une composition bitumineuse pour enrobés coulés à froid, comportant :
- une émulsion bitumineuse surstabilisée,
- des granulats à profil de répartition discontinu,
- des fibres synthétiques qui ont subi un traitement de surface qui assure la répulsion desdites fibres entre elles,
- des adjuvants.

Dans l'ensemble de la description et des revendications, on entend par "émulsion bitumineuse surstabilisée", une émulsion dont le temps de rupture est suffisamment long pour permettre l'enrobage de tous les granulats y compris les plus fins.

De façon particulièrement avantageuse, les fibres synthétiques présentent un poids compris entre 1 et 100 dtex.

Ces fibres peuvent être choisies parmi les fibres acryliques, les fibres de cellulose, de polyamide, polypropylène, de polyester.

La composition pourra comporter préférentiellement environ 0,05 à environ 0,50 % en poids de fibres sèches (calculé par rapport au poids de granulat sec). Un dosage compris entre environ 0,10 et environ 0,30 % est encore préféré.

Selon une caractéristique particulière de l'invention, l'émulsion bitumineuse est une émulsion cationique ou anionique. Il peut s'agir d'une émulsion à base de bitume pur ou modifié. Les granulats utilisés présentent, de préférence, une granulométrie discontinue comprise entre 0 et 14 mm avec un palier entre 2 et 6 mm ou un double palier (entre 2 et 4 mm et entre 6 et 10 mm), ou encore une granulométrie discontinue comprise entre 0 et 10 mm avec un palier entre 2 et 6 mm, ou encore une granulométrie discontinue comprise entre 0 et 6 mm avec un palier entre 2 et 4 mm.

Selon une autre caractéristique, la composition bitumeuse comporte, à titre d'adjuvant, au moins un retardateur de rupture de l'émulsion bitumineuse.

Ce retardateur peut être choisi dans le groupe constitué par :
- un ciment,
- une solution aqueuse d'un sel d'ammonium quaternaire,
- une solution aqueuse d'une amine, diamine ou polyamine.

La présente invention concerne aussi un procédé de réalisation d'un enrobé coulé à froid consistant à effectuer, au sein d'une centrale mobile, les étapes suivantes :

a) malaxage des granulats, des adjuvants et de l'eau de prémouillage,

b) dosage des fibres, puis malaxage avec le produit issu de l'étape a),

c) dosage de l'émulsion bitumineuse puis malaxage avec le produit issu de l'étape b),

puis à répandre l'enrobé sur la surface à recouvrir. Préférentiellement, les fibres sont dosées à sec.

La composition bitumineuse de la présente invention permet d'obtenir un E.C.F. de viscosité élevée, donc très maniable sans ségrégation.

En effet, les fibres introduites modifient la consistance du milieu, ce qui réduit fortement le phénomène de ségrégation des granulats lors des opérations de malaxage de l'enrobé, de déversement dans le traîneau épandeur, d'épandage sur la chaussée.

Les fibres permettent aussi d'obtenir un E.C.F. à texture remarquablement homogène dont la macrorugosité est très élevée, tout en utilisant une granulométrie discontinue.

Les fibres contribuent à l'obtention d'un meilleur uni de surface car le rejet est fortement réduit du fait de la discontinuité de la granulométrie de l'enrobé, et en conséquence de la résistance apportée par le réseau fibreux.

Enfin, les fibres procurent une amélioration de la déformabilité élastique de l'enrobé, ce qui a pour effet de prolonger sa durée de service.

D'autres caractéristiques et avantages de la présente invention apparaîtront au cours de la description détaillée qui va suivre, faite en référence à des dessins dans lesquels :

- les figures 1A et 1B représentent respectivement les hauteurs au sable d'un enrobé coulé à froid conforme à la présente et d'un enrobé coulé à froid à granulométrie continue et ne comportant pas de fibres ;

- la figure 2 représente, en coupe transversale, un dispositif de dosage de fibres pour la mise en oeuvre du procédé de la présente invention.

La composition bitumineuse pour enrobés coulés à froid conforme à l'invention comporte une émulsion de bitume.

Il peut s'agir de bitume pur, par exemple de grade 80/100 (ou 180/220, ou encore 60/70). On peut utiliser aussi du bitume modifié par des élastomères de synthèse (tels que l'Ethylène vinyl acétate -EVA- ou le Styrène Butadiène séquencé - SBS-) ou naturels(par exemple, le latex).

La modification peut être faite avant la mise en émulsion du bitume. Dans ce cas, on émulsionnera le bitume modifié en usine. On parle alors d'émulsion monophase.

La modification peut aussi être faite au moment du malaxage de l'E.C.F. L'additif est dosé par une rampe distribuant une dispersion aqueuse d'additif, alors que le bitume pur en émulsion est dosé par une autre rampe. L'émulsion de bitume modifié obtenue est dite biphase.

Une formulation classique d'émulsion monophase cationique, susceptible d'être utilisée dans le cadre de la présente invention est la suivante :

| . Liant | Bitume pur ou modifié par 3% d'EVA | 600 à 690 kg |
|---|---|---|
| . Emulsifiant | Sel d'ammonium quaternaire seul ou associé à d'autres émulsifiants | 6 à 15 kg |
| . Acide | HCl, jusqu'à obtention d'un pH compris entre 2 et 6 | 0 à 10 kg |
| . Chlorure de calcium | réduit la viscosité de l'émulsion | 0 à 2 kg |
| . Eau | eau traitée | Complément à 1000 kg |

Le retardateur de rupture de l'émulsion peut être par exemple une solution aqueuse d'un sel ammonium quaternaire ou d'une amine salifiée par un acide (HCl). Le retardateur de rupture est dosé à raison de 0,1 à 1‰ par rapport au poids de granulats secs de l'enrobé coulé à froid. La quantité varie entre les 2 bornes délimitées plus haut en fonction :

- de la nature minéralogique des granulats,

- de la température des granulats, du sol, de l'air,

- de la durée de rupture souhaitée Pour l'émulsion.

La composition pour enrobés coulés à froid de la présente invention comporte des granulats à profil de répartition discontinu.

Le tableau ci-dessous illustre des exemples de répartitions granulométriques susceptibles d'être utilisés dans le cadre de la présente invention.

| REPARTITION GRANULOMETRIQUE (mm) | Pourcentage passant à x mm | | | | | | | |
|---|---|---|---|---|---|---|---|---|
| | x = 0,08 | x = 2 | x = 4 | x = 6 | x = 10 | x = 12 | x = 14 | x = 16 |
| 0/6 | 8-12 | 5-50 | 35-50 | 90-100 | 100 | 100 | 100 | 100 |
| 0/10 | 8-12 | 5-50 | 35-50 | 40-55 | 90-100 | 100 | 100 | 100 |
| 0/14 | 8-12 | 5-50 | 35-50 | 40-55 | 55-80 | - | 90-100 | 100 |

Comme cela a été précisé plus haut, la composition de la présente invention comporte des fibres qui améliorent remarquablement la consistance de l'enrobé coulé, le rendent peu ségrégable, modifiant ainsi considérablement sa texture une fois mis en oeuvre.

En effet, les fibres utilisées ont subi un traitement de surface qui assure, au sein de la composition bitumineuse la répulsion des fibres entre elles, mobilisant ainsi l'eau du milieu, et entrainant en conséquence, une augmentation très importante de la consistance de l'enrobé coulé, et donc une réduction très forte de la ségrégation des granulats.

Elles présentent un poids compris entre environ 1 et environ 100 dtex(le tex est défini comme étant la masse (g) d'une fibre de 1000 m de long). Le diamètre moyen d'une fibre peut être calculé à l'aide de la formule suivante :

$$d = 11,3 \sqrt{\frac{T}{\rho}}$$

d = diamètre (en $\mu$m)
T = titre (dtex)
$\rho$ = masse volumique (g/cm$^3$)

Des fibres de nature acrylique de même que des fibres de polypropylène ou de polyester sont particulièrement compatibles avec les émulsions cationiques le plus souvent utilisées sous climat tempéré (Europe).

Des fibres en cellulose, en polyamide, conviennent aussi dans le cadre de l'invention mais sont de préférence utilisées avec une émulsion anionique.

Le dosage en fibres varie selon l'objectif recherché mais sera de préférence compris entre environ 0,10 et environ 0,30% en poids de fibres sèches par rapport aux granulats secs. Afin d'obtenir un simple changement de la consistance de l'E.C.F., par exemple pour en améliorer l'homogénéité, un dosage voisin de 0,15% pourra se révéler suffisant (le même E.C.F. à granulométrie discontinue mais ne comportant pas de fibre a une structure tout à fait hétérogène). Dans le but d'améliorer les caractéristiques à long terme, un dosage compris entre 0,15 et 0,30% pourra se révéler efficace.

En mettant en oeuvre 20 à 25 kg/m$^2$ d'E.C.F. 0/10 mm qui comprend 11% d'émulsion et 7% d'eau de prémouillage, il reste (22500/1,18) 19068 g/m$^2$ de granulats secs. En utilisant 0,15% de fibres sèches, le poids total de fibres est 28,6 grammes. En supposant que les fibres pèsent 3 dtex et que leur longueur est de 6 mm, on a, par m$^2$, 95 km de fibre, soit 15 000 000 de fibres individuelles. L'ordre de grandeur de ce chiffre est considérable et explique la modification spectaculaire de la consistance de l'E.C.F.

Les exemples ci-dessous illustrent des expérimentations menées sur des compositions bitumineuses conformes à l'invention.

Exemple 1 - Essais rhéologiques

1.1 - Mesures de la consistance d'un liant à l'aide du viscosimètre de Krebs

Le viscosimètre Krebs permet la mesure de la viscosité ou de la consistance par la détermination du poids qui est nécessaire pour imprimer à l'agitateur normalisé une vitesse de 100 tours en 30 secondes (environ) à température ambiante.

Cet instrument est muni d'un agitateur normalisé à 2 ailettes, immergé dans le produit à tester.

Une charge variable est attachée à l'extrémité d'un câble fixé à un tambour d'enroulement. Sous le poids de la charge, le câble se déroule sur une petite poulie et le tambour communique à l'agitateur un mouvement de rotation. Un compteur indique le nombre de révolutions de l'agitateur. On ajuste le poids nécessaire pour obtenir la vitesse de 200 t/min.

La consistance s'exprime en unités Krebs : "K.U.".

Cet instrument détermine aisément l'évolution de la viscosité d'un produit en phase aqueuse.

Un tableau comparatif donne la mesure en fonction de la vitesse et du poids. Deux émulsions bitumineuses surstabilisées sont testées :

. la première (E1) est une émulsion de bitume pur alors que la seconde (E2) est une émulsion de bitume modifié comportant des élastomères (Ethylène Vinyl Acétate).

Le tableau I ci-dessous donne les résultats de ces essais préliminaires, sans fibre, et avec addition de 0,15 % fibres acryliques 1,6 dtex/4mm.

Tableau I

| Composition de l'émulsion | Viscosité (K.U.) |
|---|---|
| E1 + eau | 28 |
| E2 + eau | 28,5 |
| E1 + eau + Fibres | 74 |
| E2 + eau + Fibres | 78 |

Ces résultats montrent le changement de consistance d'une émulsion bitumineuse comportant des fibres.

1.2 - Mesures de la viscosité d'un liant à l'aide du viscosimètre Contraves TV

Le viscosimètre Contraves TV permet de mesurer la viscosité à une seule vitesse de cisaillement par système de mesure (ailettes de forme et de dimension adaptées au diamètre du godet rempli de la suspension à tester).

Principe de fonctionnement

Le viscosimètre est constitué par un système de mesure du couple de rotation avec moteur d'entraînement incorporé. L'entraînement du système de mesure et la mesure du couple de rotation s'effectue par le même axe. Le couple de rotation, transmis sans friction, est indiqué de façon continue par une aiguille sur une échelle circulaire.

Ce système de mesure est approprié pour tous genres de liquides et notamment pour des suspensions pulpeuses et fibreuses. L'effet agitateur des corps de mesure prévient ou ralentit une séparation ou sédimentation des solides au cours de la mesure.

Tableau II

| % en poids de granulats secs | Emulsion E1 | | | | Emulsion E2 | | | |
|---|---|---|---|---|---|---|---|---|
| | E1 seule | E1 + Eau | E1 + Fibres | E1 + Eau + Fibres | E2 seule | E2 + Eau | E2 + Fibres | E2 + Eau + Fibres |
| Emulsion % | 12 | 12 | 12 | 12 | 12 | 12 | 12 | 12 |
| Eau % | - | 9 | - | 9 | - | 9 | - | 9 |
| Fibres % | - | - | 0,15 | 0,15 | - | - | 0,15 | 0,15 |
| Viscosité en cps | 40 | 2 | 520 | 280 | 40 | 2 | 480 | 250 |

Ces résultats illustrent le net changement de consistance d'une émulsion de bitume comportant des fibres.

5

1.3. Essais de maniabilimètre L.C.L à mortier sur un E.C.F. à granulométrie discontinue 0/10 mm

On fait varier la teneur en eau de mouillage des granulats avant l'introduction de l'émulsion, additivée ou non de fibres

Tableau III

| Teneur en eau mouillage % | Maniabilité en secondes (temps d'écoulement sous vibration) | | | |
|---|---|---|---|---|
| | E.C.F. Emulsion E1 | | E.C.F. Emulsion E2 | |
| | sans fibre | avec 0,15% fibre | sans fibre | avec 0,15% fibre |
| 5 | 9 | 12 | 9 | 13 |
| 6 | 3 | 7 | 4 | 8 |
| 7 | 2 | 4 | 3 | 5 |
| 8 | 1 | 3 | 1 | 3 |

Le changement de consistance de l'E.C.F. est très nettement mis en évidence.

Exemple 2 - Essais à long terme caractérisant l'enrobé coulé

Essais de traction par flexion sur éprouvettes trapézoïdales pour détermination du module

Des éprouvettes trapézoïdales (grande base : 56 mm ; petite base : 25 mm : hauteur : 250 mm : épaisseur : 25 mm) sont préparées par moulage d'un enrobé coulé à froid 0/4 continu, mis en place de façon que la compacité finale de l'enrobé soit égale à 91%.

Pendant l'essai de traction/flexion, l'éprouvette est maintenue par sa grande base. On opère à 10°C et à 25 Hz. On applique une déformabilité constante de $1,10^{-4}$ Mdef. Le module dynamique tangent est calculé. Les résultats sont consignés dans le tableau IV.

Tableau IV

| PARAMETRE | Emulsion E1 | | Emulsion E2 | |
|---|---|---|---|---|
| | sans fibre | 0,15% en poids de fibres * | sans fibre | 0,15% en poids de fibres * |
| RT/F (DaN) | 4,75<br>4,45<br>$\overline{m}$ = 4,60 | 4,20<br>4,50<br>$\overline{m}$ = 4,35 | 3,70<br>3,80<br>$\overline{m}$ = 3,75 | 3,45<br>3,60<br>$\overline{m}$ = 3,55 |
| E (MPa) | 8355<br>8045<br>$\overline{m}$ = 8200 | 7593<br>7898<br>$\overline{m}$ = 7745 | 6663<br>6813<br>$\overline{m}$ = 6738 | 6227<br>6332<br>$\overline{m}$ = 6279 |

* Fibres acryliques 4 mm/1,6 dtex

Ce tableau montre que l'on obtient une réduction de 6 % du module par l'apport de fibres, améliorant ainsi la déformabilité de l'ECF quelle que soit l'émulsion utilisée pour l'enrobage.

Exemple 3 - Rugosité géométrique - hauteur au sable

La rugosité géométrique d'un E.C.F. est généralement appréciée par la hauteur au sable.

Les tableaux ci-dessous se rapportent aux spécifications en vigueur (Décision ministérielle du 11/06/69) ainsi qu'à différents tests concernant des E.C.F. dont un E.C.F. conforme à la présente invention.

| SPECIFICATIONS | | | |
|---|---|---|---|
| Revêtement (catégorie) | Hauteur au sable (mm) | Vitesse (Km/h) | Texture du revêtement |
| B | 0,2/0,4 | 80 | fine |
| C | 0,4/0,8 | 80-120 | moyenne |
| D | 0,8/1,2 | 120 | grossière |

| GRANULOMETRIE DES ECF | | HAUTEUR AU SABLE (mm) |
|---|---|---|
| TYPE | 0/D | |
| Discontinu avec fibre | 0/10 | 1,10 |
| Continu sans fibre | 0/10 | 0,99 |
| Continu sans fibre | 0/6 | 0,60 |

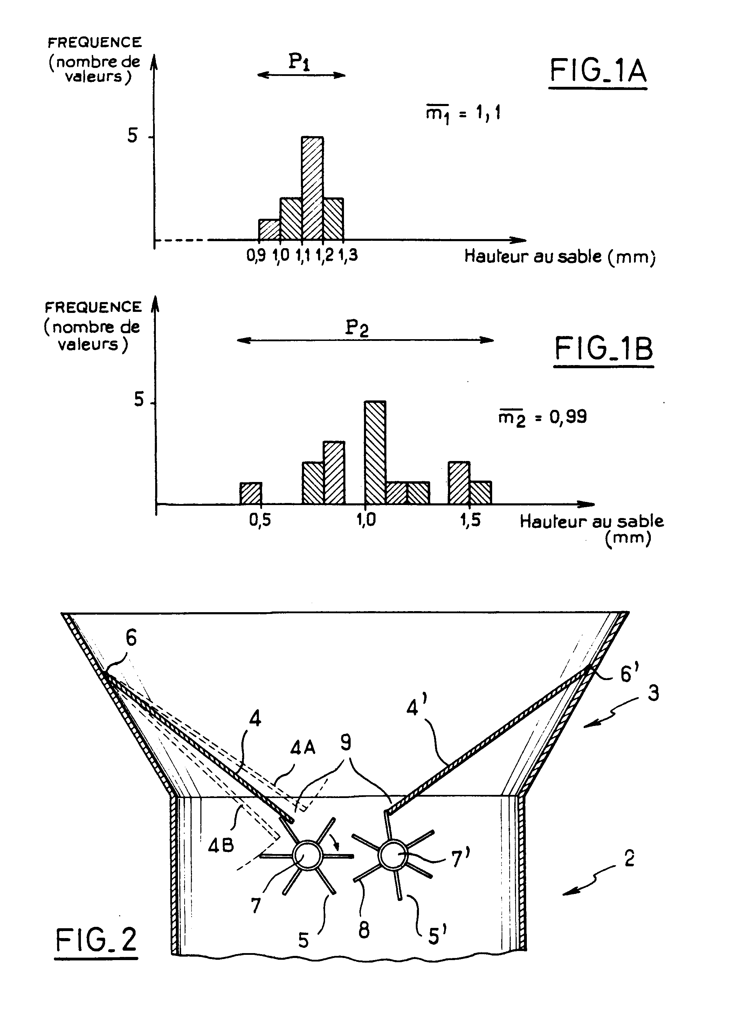

Les figures 1A et 1B montrent respectivement la hauteur au sable d'un E.C.F. discontinu 0/10 mm avec fibres et d'un E.C.F. continu 0/10 mm sans fibre. On constate que la valeur moyenne $\overline{m}_1$ des hauteurs au sable est supérieure à $\overline{m}_2$ et que la plage de variation $P_1$ est inférieure à $P_2$. Cela se traduit par une très grande homogénéité de la rugosité obtenue avec un E.C.F. discontinu comportant des fibres.

La présente invention concerne aussi un procédé de réalisation d'un enrobé coulé à froid dont la composition est conforme à celle-ci.

A titre d'exemple, un procédé conforme à la présente invention consiste à malaxer, à l'intérieur d'une centrale mobile de type connu, les granulats, les adjuvants (ciment, retardateur de rupture) et de l'eau de prémouillage des granulats, par l'intermédiaire d'une rampe, par exemple. Les fibres sont alors dosées, à sec préférentiellement, et malaxées avec l'amalgame obtenu précédemment.

L'émulsion est alors dosée, incorporée au mélange et malaxée.

L'enrobé obtenu est alors répandu sur la surface à recouvrir, selon les techniques habituelles connues de l'homme du métier.

Cette succession d'étapes permet d'obtenir une bonne répartition des fibres au sein de la masse avant même de recevoir l'émulsion bitumeuse.

La figure 2 représente, en coupe transversale, un dispositif de dosage de fibres pour la mise en oeuvre du procédé de la présente invention. Ce dispositif a une forme générale de trémie 1. Cette trémie est constituée d'une partie inférieure 2 de section droite constante et d'une partie supérieure 3 évasée vers le haut, destinée à recevoir les fibres. A l'intérieur de cette trémie sont présents des volets 4 et 4′ ainsi que des moyens d'entraînement 5 et 5′.

Les volets 4 et 4′ sont des éléments plans articulés respectivement sur la surface interne de deux faces opposées de la partie supérieure 3. Ces volets sont articulés autour d'axes longitudinaux et horizontaux 6 et 6′ et convergent vers le bas en direction du centre de la trémie.

Les moyens d'entraînement 5 et 5′ sont des arbres cylindriques 7 et 7′ d'axe horizontal et de même direction que les axes 6 et 6′. Ils sont entraînés en rotation par un moyen de type connu, tel qu'un moteur hydraulique. La rotation des arbres 7 et 7′ s'effectue en sens opposés.

Les arbres 7 et 7′ comportent sur leur périphérie des ailettes longitudinales équidistantes 8. Dans l'exemple illustré, les arbres 7 et 7′ comportent 6 ailettes. Ils pourraient toutefois en comporter un nombre différent à condition qu'il s'agisse d'un nombre pair supérieur ou égal à 4. Les arbres 7 et 7′ sont placés respectivement au dessous des volets associés 4 et 4′, au voisinage de l'extrémité libre 9 desdits volets. Plus précisément, la position des arbres 7 et 7′ est telle que, lorsque ceux-ci sont mis en rotation, les ailettes 8 viennent successivement et temporairement en prise sur le bord libre 9 des volets.

La distance entre les axes des deux arbres 7 et 7′ est telle que, lors de la rotation desdits arbres, les ailettes se chevauchent partiellement. Le fonctionnement du dispositif peut alors être le suivant :

Des fibres sont chargées dans la trémie par la partie supérieure 3 et les moyens d'entraînement 5 et 5′ sont mis en rotation.

Les volets 4 et 4′ se déplacent progressivement entre les positions 4A et 4B au fur et à mesure de la rotation des arbres 7 et 7′.

7

Lorsque le battant 4 arrive en position 4A, il n'est plus soutenu par l'ailette associée et retombe brusquement sur l'ailette adjacente. Ce mouvement brusque provoque une secousse des fibres et un meilleur écoulement de celles-ci vers le bas de la trémie.

Le déplacement des volets 4 et $4'$ est limité vers le bas, par le nombre d'ailettes et par la vitesse de rotation des arbres. Dans une variante de réalisation du dispositif, on peut équiper la trémie de butées qui viendront limiter le déplacement des volets à un endroit désiré.

Le débit de fibres s'écoulant au-delà des arbres 7 et $7'$ pourra être adapté en fonction de la vitesse de rotation de ceux-ci.

**Revendications**

**1.** Composition bitumineuse pour enrobés coulés à froid, comportant :
- une émulsion bitumineuse surstabilisée,
- des granulats à profil de répartition discontinu,
- des fibres synthétiques qui ont subi un traitement de surface qui assure la répulsion desdites fibres entre elles,
- des adjuvants.

**2.** Composition bitumineuse selon la revendication 1, caractérisée en ce que le poids desdites fibres est compris entre environ 1 et environ 100dtex.

**3.** Composition bitumineuse selon l'une des revendications 1 et 2, caractérisée en ce que lesdites fibres sont choisies parmi les fibres acryliques, les fibres de cellulose, de polyamide, de propylène, de polyester.

**4.** Composition bitumineuse selon l'une des revendications 1 à 3, caractérisée en ce qu'elle comporte environ 0,05 à environ 0,5% en poids de fibres sèches par rapport au poids de granulats secs.

**5.** Composition bitumineuse selon la revendication 4, caractérisée en ce qu'elle comporte environ 0,10 à environ 0,30% en poids de fibres sèches par rapport au poids de granulats secs.

**6.** Composition bitumineuse selon l'une des revendications 1 à 5, caractérisée en ce que ladite émulsion est une émulsion cationique ou anionique.

**7.** Composition bitumineuse selon l'une des revendications 1 à 6, caractérisée en ce que les granulats présentent une répartition granulométrique comprise entre 0 et 14 mm avec une discontinuité simple entre 6 et 10 mm ou avec une double discontinuité entre 2 et 4 mm et entre 6 et 10 mm.

**8.** Composition bitumineuse selon l'une des revendications 1 à 6, caractérisée en ce que les granulats présentent une répartition granulométrique comprise entre 0 et 10 mm avec une discontinuité entre 2 et 6 mm.

**9.** Composition bitumineuse selon l'une des revendications 1 à 6, caractérisée en ce que les granulats présentent une répartition granulométrique comprise entre 0 et 6 mm avec une discontinuité entre 2 et 4 mm.

**10.** Composition bitumineuse selon l'une des revendications 1 à 9 , caractérisée en ce qu'elle comporte, à titre d'adjuvant, au moins un retardateur de rupture de l'émulsion bitumineuse.

**11.** Composition bitumineuse selon la revendication 10, caractérisée en ce que ledit retardateur est choisi dans le groupe constitué par :
- un ciment,
- une solution aqueuse d'un sel d'ammonium quaternaire,
- une solution aqueuse d'une amine, diamine ou polyamine.

**12.** Procédé de réalisation d'un enrobé coulé à froid conforme à la composition selon l'une des revendications 1 à 11, consistant à effectuer, au sein d'une centrale mobile, les étapes suivantes :
a) malaxage des granulats, des adjuvants et de l'eau de prémouillage,

b) dosage des fibres, puis malaxage avec le produit issu de l'étape a),
c) dosage de l'émulsion bitumineuse, puis malaxage avec le produit issu de l'étape b),
puis à répandre l'enrobé sur la surface à recouvrir.

13. Procédé selon la revendication 12, caractérisé en ce que, à l'étape b), lesdites fibres sont dosées à sec.

**Claims**

1. Bituminous composition for cold mixes, having:
    - a superstabilized bituminous emulsion,
    - granules with a discontinuous distribution profile,
    - synthetic fibres which have undergone a surface treatment ensuring mutual repulsion of the said fibres,
    - additives.

2. Bituminous composition according to Claim 1, characterized in that the weight of the said fibres is between approximately 1 and approximately 100 dtex.

3. Bituminous composition according to either of Claims 1 and 2, characterized in that the said fibres are selected from acrylic fibres, cellulose, polyamide, propylene or polyester fibres.

4. Bituminous composition according to one of Claims 1 to 3, characterized in that it has approximately 0.05 to approximately 0.5 % by weight of dry fibres in relation to the weight of dry granules.

5. Bituminous composition according to Claim 4, characterized in that it has approximately 0.10 to approximately 0.30 % by weight of dry fibres in relation to the weight of dry granules.

6. Bituminous composition according to one of Claims 1 to 5, characterized in that the said emulsion is a cationic or anionic emulsion.

7. Bituminous composition according to one of Claims 1 to 6, characterized in that the granules have a grain size distribution of between 0 and 14 mm with a single discontinuity between 6 and 10 mm or with a double discontinuity between 2 and 4 mm and between 6 and 10 mm.

8. Bituminous composition according to one of Claims 1 to 6, characterized in that the granules have a grain size distribution of between 0 and 10 mm with a discontinuity between 2 and 6 mm.

9. Bituminous composition according to one of Claims 1 to 6, characterized in that the granules have a grain size distribution of between 0 and 6 mm with a discontinuity of between 2 and 4 mm.

10. Bituminous composition according to one of Claims 1 to 9, characterized in that it has by way of additive at least one breaking retarder of the bituminous emulsion.

11. Bituminous composition according to Claim 1, characterized in that the said retarder is selected from the group comprising:
    - a cement,
    - an aqueous solution of a quaternary ammonium salt,
    - an aqueous solution of an amine, diamine or polyamine.

12. Process for producing a cold mix in accordance with the composition according to one of Claims 1 to 11, consisting in carrying out within a mobile plant the following steps:
    a) kneading the granules, the additives and the pre-wetting water,
    b) metering the fibres, then kneading with the product of step a),
    c) metering the bituminous emulsion, then kneading with the product of step b),
    then spreading the mix on the surface to be covered.

13. Process according to Claim 12, characterized in that, in step b), the said fibres are metered in the dry state.

**Patentansprüche**

1. Kalt aufbereitete bituminöse Mischung, enthaltend:
   - eine überstabilisierte bituminöse Emulsion,
   - Granulate mit diskontinuierlichem Verteilungsprofil,
   - synthetische Fasern, die einer Oberflächenbehandlung unterzogen wurden, um die Abstoßung der genannten Fasern untereinander zu gewährleisten,
   - Zusatzstoffe.

2. Bituminöse Mischung nach Anspruch 1, dadurch gekennzeichnet, daß das Gewicht der genannten Fasern ungefähr zwischen 1 und 100 dtex beträgt.

3. Bituminöse Mischung nach einem der Ansprüche 1 und 2, dadurch gekennzeichnet, daß die genannten Fasern ausgewählt werden unter Acrylfasern, Zellulosefasern, Polyamidfasern, Polypropylenfasern und Polyesterfasern.

4. Bituminöse Mischung nach einem der Ansprüche 1 bis 3, dadurch gekennzeichnet, daß sie ungefähr 0,05 bis 0,5 Gewichtsprozent trockene Fasern in bezug auf das Gewicht der trockenen Granulate umfaßt.

5. Bituminöse Mischung nach Anspruch 4, dadurch gekennzeichnet, daß sie ungefähr 0,10 bis 0,30 Gewichtsprozent trockene Fasern in bezug auf das Gewicht der trockenen Granulate umfaßt.

6. Bituminöse Mischung nach einem der Ansprüche 1 bis 5, dadurch gekennzeichnet, daß die genannte Emulsion eine kationische oder anionische Emulsion ist.

7. Bituminöse Mischung nach einem der Ansprüche 1 bis 6, dadurch gekennzeichnet, daß die Granulate eine granulometrische Verteilung zwischen 0 und 14 mm mit einer einfachen Diskontinuität zwischen 6 und 10 mm oder mit einer doppelten Diskontinuität zwischen 2 und 4 mm und zwischen 6 und 10 mm aufweisen.

8. Bituminöse Mischung nach einem der Ansprüche 1 bis 6, dadurch gekennzeichnet, daß die Granulate eine granulometrische Verteilung zwischen 0 und 10 mm mit einer Diskontinuität zwischen 2 und 6 mm aufweisen.

9. Bituminöse Mischung nach einem der Ansprüche 1 bis 6, dadurch gekennzeichnet, daß die Granulate eine granulometrische Verteilung zwischen 0 und 6 mm mit einer Diskontinuität zwischen 2 und 4 mm aufweisen.

10. Bituminöse Mischung nach einem der Ansprüche 1 bis 9, dadurch gekennzeichnet, daß sie als Zusatzstoff mindestens einen Brechungsverzögerer für die bituminöse Emulsion umfaßt.

11. Bituminöse Mischung nach Anspruch 10, dadurch gekennzeichnet, daß der genannte Verzögerer ausgewählt wird aus der Gruppe, die besteht aus:
    - einem Zement,
    - einer wäßrigen Lösung eines quaternären Ammoniumsalzes,
    - einer wäßrigen Lösung eines Amins, Diamins oder Polyamins.

12. Verfahren zur Herstellung einer kalt aufbereiteten Mischung nach einem der Ansprüche 1 bis 11, das darin besteht, in einer mobilen Zentraleinheit in Übereinstimmung mit den folgenden Stufen durchgeführt zu werden:
    a) Vermischung der Granulate, der Zusatzstoffe und Vorbenetzungs-Wasser,
    b) Dosierung der Fasern und anschließendes Vermischen mit dem von Stufe a) stammenden Produkt,
    c) Dosierung der bituminösen Emulsion und anschließendes Vermischen mit dem von Stufe b) stammenden Produkt,

sowie danach Ausbreiten der Mischung auf der zu bedeckenden Oberfläche.

13. Verfahren nach Anspruch 12, dadurch gekennzeichnet, daß in Stufe b) die genannten Fasern trocken dosiert werden.

FREQUENCE (nombre de valeurs)

$\overline{m_1} = 1,1$

FIG. 1A

Hauteur au sable (mm)

FREQUENCE (nombre de valeurs)

$\overline{m_2} = 0,99$

FIG. 1B

Hauteur au sable (mm)

FIG. 2